# EUROPÄISCHE PATENTANMELDUNG

(11) **EP 2 546 045 A1**
(43) Veröffentlichungstag der Anmeldung: **16.01.2013**
(21) Anmeldenummer: 12176362.7
(22) Anmeldetag: 13.07.2012
(51) Int. Cl.: B29C 47/34, B65G 13/12, B29C 47/90, B29C 47/08

(54) **Vorrichtung und Verfahren zur Unterstützung von Kunststoffprofilen in einer Extrusionslinie**

(30) Priorität: 13.07.2011 DE 102011079071
(71) Anmelder: Wavin B.V., 8011 CW Zwolle (NL)
(72) Erfinder: Bobke, Holger, 39435 Egeln (DE)
(74) Vertreter: HOFFMANN EITLE

(57) **Zusammenfassung**

Eine Vorrichtung und ein Verfahren zur Unterstützung von Kunststoffprofilen in einer Extrusionslinie. Die Vorrichtung hat zumindest zwei Stützelementen (R1, R2, R3), die jeweils eine Stützkontur (SK1, SK2, SK3) aufweisen. Die Stützkonturen der Stützelemente sind verschieden voneinander ausgestaltet, um eine Unterstützung von Kunststoffprofilen (P1, P2, P3) mit unterschiedlichen Dimensionen und / oder Geometrien zu gewährleisten. Eine Stelleinrichtung ist dazu ausgestaltet, jeweils eines der Stützelemente in eine Arbeitsposition zu bringen, in der die Stützkontur dieses Stützelements für den Kontakt mit den zu unterstützenden Kunststoffprofilen angeordnet ist.

## Beschreibung

### Technisches Gebiet

Die vorliegende Erfindung betrifft eine Vorrichtung zur Unterstützung von Kunststoffprofilen, insbesondere von Rohren, in einer Extrusionslinie gemäß dem Oberbegriff des Patentanspruchs 1.

Die Erfindung betrifft auch eine Extrusionslinie, die eine solche Vorrichtung verwendet, und ein Verfahren zum Unterstützen von Kunststoffprofilen in einer Extrusionslinie.

### Stand der Technik

Bei der Produktion von Kunststoffprofilen wie z.B. Kunststoffrohren in einer solchen Extrusionslinie wird ein thermoplastischer Kunststoff in Granulat- oder Pulverform der Extrudereinheit zugeführt. In dieser wird das Granulat bzw. Pulver erwärmt, geknetet und plastifiziert. Anschließend wird der Kunststoff als formbare Masse durch eine Extruderschnecke in einen Rohrkopf gefördert und dort durch einen ringförmigen Austrittsspalt gedrückt.

Nach dem Austritt aus dem Rohrkopf wird das heiße, noch verformbare Rohr mittels eines am Ende der Extrusionslinie angeordneten Raupenabzugs durch eine Kalibrier- und Kühleinheit gezogen, die einen Vakuumtank mit einer an dessen Eingang angeordneten Kalibrierhülse aufweist. Diese ist stufenlos im Durchmesser einstellbar, so dass das extrudierte, noch formbare Rohr auf den gewünschten Durchmesser gebracht werden kann.

Nach dem Verlassen der Kalibrier- und Kühleinheit tritt das Rohr in eine Kühlstrecke ein, in der es auf Raumtemperatur abgekühlt wird. Die Kühlung der Rohre kann dabei in Tanks mit Wasserbädern oder Sprühdüsen erfolgen.

Erst nach Verlassen dieser Kühlstrecke ist das extrudierte Rohr ausgehärtet und für nachfolgende Beanspruchungen (zum Beispiel Abzugsvorrichtung, Wickler) ausreichend formstabil. Zuvor muss es abgestützt werden, um ein Durchhängen und Deformieren zu vermeiden. Dazu sind in der Kühlstrecke und/oder in der Kalibrier- und Kühleinheit Rohrunterstützungen vorgesehen.

Sowohl im Vakuumtank als auch in der Kühlstrecke ist es erforderlich, das Rohr mittels einer geeigneten Rohrunterstützung zu stützen und zu führen.

Dabei sollten die Rohre stets mittig geführt werden, um eine optimale Kühlung zu gewährleisten.

Die Rohrunterstützung soll die gerade frisch extrudierten Rohre möglichst so unterstützen, dass sie keinen Schaden nehmen. Einerseits sollen keine Flachstellen entstehen, obwohl das Eigengewicht der Rohre diesen Effekt haben könnte. Flachstellen führen zu einer Ovalität des Rohres, was die Qualität stark beeinträchtigt. Andererseits ist dafür zu sorgen, dass eventuelle Rückstände an der Haltevorrichtung (Materialausschwitzungen, Ablagerungen durch Wasser, ...) die empfindliche, noch weiche Oberfläche der gerade extrudierten Rohre nicht beschädigen, z.B. zerkratzen.

Mittels ein und derselben Extrusionsvorrichtung können dabei Rohre mit unterschiedlichen Durchmessern extrudiert werden.

Der Wechsel des Durchmessers kann dabei kontinuierlich erfolgen, d.h. ohne dass die Extrusionsvorrichtung zum Wechseln zwischen den verschiedenen Durchmessern angehalten und umgerüstet wird. Die Haltevorrichtung soll daher für alle Durchmesser gleichermaßen geeignet sein.

Im Stand der Technik sind bereits verschiedene Ausgestaltungen solcher Rohrunterstützungen bekannt. Dabei ist die Stützvorrichtung entweder für alle Rohrdurchmesser gleichzeitig geeignet, oder es wird die Möglichkeit vorgesehen, die Stützvorrichtung an verschiedene Durchmesser anzupassen oder umzuschalten.

Aus EP 1 955 838 A2 ist eine Rohrunterstützung mit einer Stützkontur bekannt, die aus einer an einem Teilumfang des Kunststoffprofils anliegenden Gliederkette besteht.

Auch die Rohrunterstützung gemäß EP A1 2 255 946 weist eine an zumindest einem Teilumfang des Rohres anliegende Gelenkgliederkette auf.

Aus DE-A1-10 2006 044 643 ist eine Rohrunterstützung mit einer Vielzahl von einzelnen, auf das Kunststoffprofil zustellbaren Stützelementen bekannt.

Die Rohrunterstützung gemäß WO-A1-2004/106034 verwendet eine Reihe von Stützrollen, die in Förderrichtung hintereinander angeordnet sind. Eine vertikale Positionierung dieser Stützrollen erfolgt gemäß dem Durchmesser des zu unterstützenden extrudierten Rohres. Diese Rohrunterstützung bildet die Grundlage für den Oberbegriff des vorliegenden Patentanspruchs 1.

### Darstellung der Erfindung

Der vorliegenden Erfindung liegt die Aufgabe zugrunde, eine Vorrichtung zur Unterstützung von Kunststoffprofilen zu schaffen, die zur Unterstützung von extrudierten Kunststoffprofilen mit unterschiedlichen Geometrien geeignet ist und schnell und einfach an diese unterschiedlichen Geometrien angepasst werden kann. Die vorliegende Erfindung soll auch eine Extrusionslinie vorsehen, die eine solche Vorrichtung verwendet, sowie ein entsprechendes Verfahren zur Unterstützung von Kunststoffprofilen.

Diese Aufgabe wird gelöst mittels einer Vorrichtung mit den Merkmalen des Patentanspruchs 1, eine Extrusionslinie mit den Merkmalen des Patentanspruchs 12 bzw. ein Verfahren mit den Merkmalen des Patentanspruchs 13.

Die erfindungsgemäße Vorrichtung zur Unterstützung von Kunststoffprofilen in einer Extrusionslinie hat zumindest zwei Stützelemente, die jeweils eine Stützkontur aufweisen. Die Stützkonturen der Stützelemente sind verschieden voneinander ausgestaltet, um eine Unterstützung von Kunststoffprofilen mit unterschiedlichen Dimensionen und / oder Geometrien zu gewährleisten. Erfindungsgemäß ist nun eine Stelleinrichtung vorgesehen, die dazu ausgestaltet ist, jeweils eines der Stützelemente in eine Arbeitsposition zu bringen, in der die Stützkontur dieses Stützelements für den Kontakt mit den zu unterstützenden Kunststoffprofilen angeordnet ist.

Anstelle einer in sich in der Geometrie anpassbaren Stützvorrichtung werden daher erfindungsgemäß mehrere separate Stützelemente verwendet, die sich in ihrer Geometrie unterscheiden, so dass jeweils eines von ihnen zum Unterstützen eines Profils mit einer bestimmten Geometrie - z.B. eines Rohres mit einem bestimmten Durchmesser - besonders gut geeignet ist.

Abhängig von der Geometrie des aktuell zu unterstützenden Profils wird mittels der Stelleinrichtung das passende Stützelement in die Arbeitsposition gebracht. Dadurch kann schnell und einfach stets die passende Stützkontur für das gerade extrudierte Profil vorgesehen werden. Die erfindungsgemäße Vorrichtung ist dadurch gut geeignet für einen Dimensionswechsel bei laufender Produktion. Da sie für die unterschiedlichen zu extrudierenden Profile verschieden ausgestaltete und daher individuell angepasste Stützkonturen verfügbar sind, werden die Profile dabei optimal unterstützt, und Beschädigung der Profiloberfläche können vermieden werden. Die erfindungsgemäße Vorrichtung hat darüber hinaus den Vorteil, dass eine zentrische Führung der Profile gewahrt bleibt.

Bevorzugte optionale Merkmale finden sich in den abhängigen Patentansprüchen.

Die Stelleinrichtung, mit der das gewünschte Stützelement in die Arbeitsposition gestellt werden kann, kann grundsätzlich auf verschiedenste Arten und Weisen ausgestaltet sein. Eine bevorzugte, konstruktiv einfache Ausgestaltung besteht darin, die Stützelemente an einer gemeinsamen Haltevorrichtung zu lagern und die Stelleinrichtung auf die Haltevorrichtung einwirken zu lassen, um jeweils eines der Stützelemente in die Arbeitsposition zu bringen. Die Haltevorrichtung kann beispielsweise einen um einen Schwenkpunkt S herum verschwenkbar gelagerten Haltearm aufweisen, auf den mittels einer geeigneten Betätigungsvorrichtung wie beispielsweise ein Gestänge eingewirkt werden kann.

Die Betätigung der Stellvorrichtung kann grundsätzlich manuell oder automatisiert erfolgen. Im letzteren Fall werden Informationen über die Abmaße der gerade zu unterstützenden Kunststoffprofile an die Stellvorrichtung übermittelt, die dann automatisch das geeignetste Stützelement auswählt und in die Arbeitsposition stellt.

Die Stützelemente sind in ihrer Form und Gestalt grundsätzlich an die zu unterstützenden Profile angepasst.

Insbesondere wenn die zu unterstützenden Profile einen ring-oder kreisförmigen Querschnitt haben, wird bevorzugt, die Stützelemente in Form von Stützrollen vorzusehen, deren Drehachsen quer zur Beförderungsrichtung der Kunststoffprofile in der Extrusionslinie verlaufen. Solche Stützrollen wurden an sich bereits im Stand der Technik verwendet. Vorliegend werden jedoch zumindest zwei Stützrollen mit unterschiedlichen Geometrien verwendet, von denen stets die gewünschte Stützrolle mittels der Stelleinrichtung in die Arbeitsposition gestellt wird.

Die Stützrollen sind vorzugsweise im wesentlichen zylindrisch ausgebildet, und die Stützkontur ist in der Mantelfläche des Zylinders ausgebildet. Die Stützkontur kann beispielsweise eine konvexe Einwölbung in der Mantelfläche des Zylinders aufweisen. Die Form der Stützrollen ist an die Dimension, insbesondere den Außendurchmesser bzw. die Krümmung am Außenumfang der extrudierten Rohre angepasst, in diesem Fall insbesondere dadurch, dass die Einwölbungen der einzelnen Stützrollen verschiedene Krümmungsradien haben.

Vorzugsweise haben die Stützelemente der erfindungsgemäßen Vorrichtung eine feste Lagebeziehung zueinander und behalten diese Lagebeziehung auch bei, unabhängig davon, welches Stützelement sich gerade in der Arbeitsposition befindet. Die unveränderliche Lagebeziehung zwischen den Stützelementen muss dann bestimmten Vorgaben folgen. Wenn die Drehmittelpunkte der Stützelemente auf einem Kreisbogen liegen, ist eine geeignete unveränderliche Lagebeziehung zwischen den Stützelementen gewährleistet. Wenn mindestens drei Stützelemente vorhanden sind, können diese beispielsweise so angeordnet werden, dass Geraden, die die Drehmittelpunkte jeweils zweier benachbarter Stützelemente miteinander verbinden, vorzugsweise winklig zueinander verlaufen.

Die Extrusionslinie gemäß der vorliegenden Erfindung weist zumindest eine der oben beschriebenen Vorrichtung zur Unterstützung von Kunststoffprofilen im Bereich eines Vakuumtanks und/oder im Bereich einer Kühlstrecke auf. Alternativ kann die Stützvorrichtung auch in anderen Bereichen der Extrusionslinie Verwendung finden, in denen eine Unterstützung der Kunststoffprofile notwendig oder erwünscht ist.

### Kurze Beschreibung der Zeichnungen

Figur 1 zeigt drei Stützrollen einer Vorrichtung zur Unterstützung von Kunststoffprofilen in einer Extrusionslinie gemäß einer bevorzugten Ausführungsform der vorliegenden Erfindung.
Figur 2 zeigt die drei Stützrollen aus Figur 1 angebracht an einem gemeinsamen Haltearm.
Figur 3 zeigt Seitenansichten des Haltearms mit den drei Stützrollen in drei verschiedenen Arbeitsstellungen.
Figur 4 zeigt Frontansichten der drei Stützrollen in den drei verschiedenen Arbeitsstellungen.
Figur 5 ist eine Frontansicht eines Vakuumtanks mit der Rohrunterstützung gemäß der bevorzugten Ausführungsform.
Figur 6 ist eine Detailansicht einer Haltevorrichtung der Rohrunterstützung.

### Ausführliche Beschreibung einer bevorzugten Ausführungsform der Erfindung

Eine bevorzugte Ausführungsform einer Vorrichtung zur Unterstützung von Kunststoffprofilen in einer Extrusionslinie gemäß der vorliegenden Erfindung wird nun mit Bezug auf die anliegenden Zeichnungen beschrieben.

In der bevorzugten Ausführungsform ist die Extrusionslinie eine Rohrextrusionslinie zum Extrudieren von Kunststoffrohren. Die Kunststoffrohre treten als heißer, noch verformbarer Materialstrang aus einem Rohrkopf der Extrusionslinie aus und werden anschließend durch eine Kalibrier- und Kühleinheit gezogen, die einen Vakuumtank mit einer an dessen Eingang angeordneten Kalibrierhülse aufweist. Diese ist stufenlos im Durchmesser einstellbar, so dass das extrudierte, noch formbare Rohr auf den gewünschten Durchmesser gebracht werden kann. Nach dem Verlassen der Kalibrier- und Kühleinheit tritt das Rohr in eine Kühlstrecke ein, in der es auf Raumtemperatur abgekühlt wird.

Sowohl im Vakuumtank als auch auf der Kühlstrecke wird das Rohr abgestützt werden, um ein Durchhängen und Deformieren zu vermeiden. Dazu ist eine Rohrunterstützung vorgesehen. Diese Rohrunterstützung verwendet drei verschiedene Stützrollen als Stützelemente für die extrudierten Rohre, und abhängig von den Dimensionen und/oder der Geometrie der gerade extrudierten Rohre wird stets die passende Stützrolle in eine Arbeitsposition gebracht, in der sie das extrudierte Rohr geeignet unterstützt.

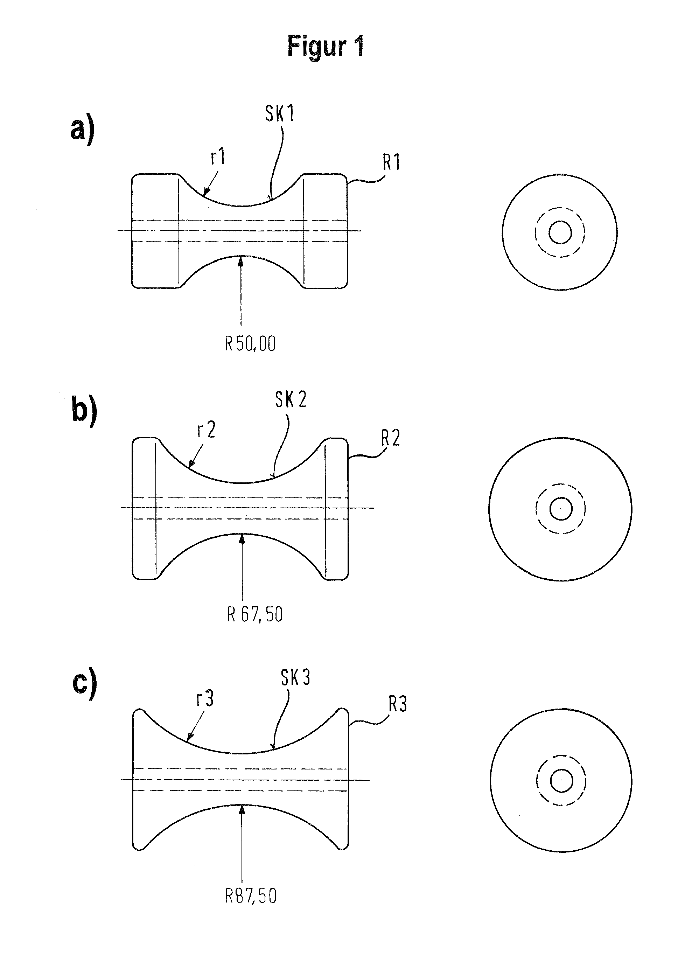

Die drei Stützrollen sind zunächst im Detail in Figur 1 dargestellt, wo sie mit R1 bis R3 bezeichnet sind. Die Stützrollen R1 bis R3 sind grundsätzlich zylinderförmig ausgestaltet und weisen jeweils eine Stützkontur SK1 bis SK3 für den Kontakt mit dem Außenumfang der jeweils zu unterstützenden extrudierten Kunststoffrohre auf. In der vorliegenden Ausführungsform sind in den Mantelflächen der zylinderförmigen Stützrollen R1 bis R3 konvexe Einbuchtungen ausgestaltet, die diese Stützkonturen SK1 bis SK3 bilden. Insgesamt haben die Stützrollen R1 bis R3 daher jeweils die Gestalt eines Hyperboloids oder einer Sanduhr.

Wie sich aus Figur 1 unmittelbar ergibt, haben diese konvexen Einbuchtungen verschiedene Krümmungsradien r1 bis r3 mit r1 < r2 < r3. Sie sind dadurch zum Unterstützen von extrudierten Kunststoffrohren mit unterschiedlichen Außendurchmessern geeignet. Im vorliegenden Ausführungsbeispiel ist die Stützrolle R1 mit dem kleinsten Krümmungsradius für Rohre mit dem Standard-Außendurchmesser 90 mm (Rohre DN90) geeignet, die Stützrolle R2 mit dem zweitgrößten Krümmungsradius r2 für Rohre mit den Standard-Außendurchmessern 110 und 125 mm (Rohre DN110 und DN125), und die Stützrolle R3 mit dem größten Krümmungsradius r3 für Rohre mit den Standard-Außendurchmessern 140 und 160 mm (Rohre DN140 und DN160).

Die Extrusionslinie an sich ist so ausgestaltet, dass Kunststoffrohre mit unterschiedlichen Geometrien, d.h. Außendurchmessern und Wanddicken, produziert werden. Dabei können die Abmaße der extrudierten Rohre ohne Anhalten der Extrusionslinie verändert werden. Die Rohrunterstützung der vorliegenden Ausführungsform kann diese extrudierten Rohre mit ihren unterschiedlichen Außendurchmessern besonders gut unterstützen, da sie die drei Stützrollen mit den jeweils passenden Stützkonturen bereithält und die jeweils geeignetste Stützrolle abhängig vom Außendurchmesser des gerade extrudierten Rohres auf die nachfolgend beschriebene Art und Weise in eine Arbeitsposition gestellt werden kann.

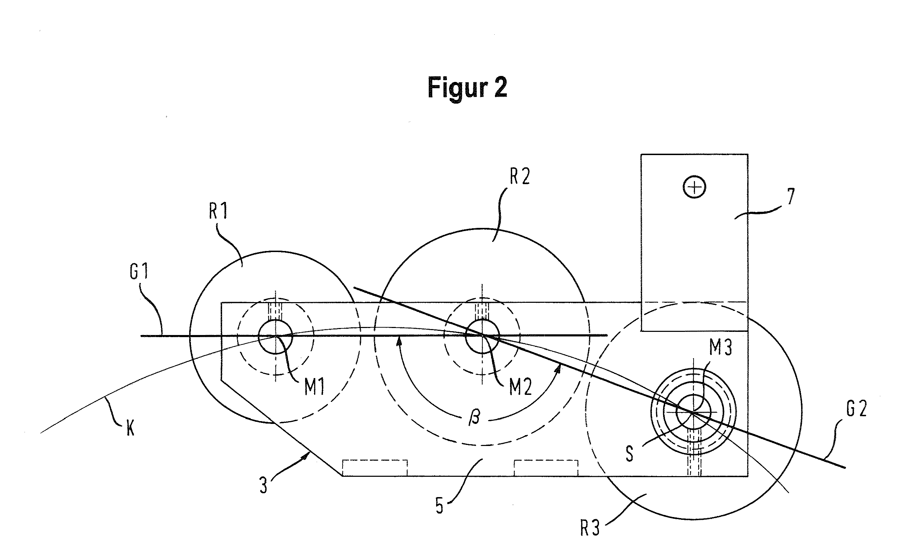

Figur 2 zeigt dazu die Anordnung der drei Stützrollen R1 bis R3 aus Figur 1 an einem gemeinsamen Rollenhalter 3, der zwei verschwenkbare Haltearme 5 aufweist, die jeweils ein Ende der Rollen R1 bis R3 drehbar lagern (entsprechend ist in Figur 2 nur ein Haltearm 5 zu sehen). Jeder Haltearm 5 ist in der bevorzugten Ausgestaltung starr mit einem Schwenkhebel 7 gekoppelt. Mittels dieses Schwenkhebels 7 kann der gesamte Rollenhalter 3 um die Schwenkachse S herum verschwenkt werden.

Die Stützrollen R1 bis R3 sind an den Haltearmen 5 zwar drehbar, aber nicht verschiebbar gelagert. Sie haben vielmehr eine bestimmte und feststehende geometrische Lagebeziehung relativ zueinander: eine Gerade G1 verbindet die Mittelpunkte der beiden Rollen R1 und R2, und eine Gerade G2 verbindet die Mittelpunkte der beiden Rollen R2 und R3. Die Geraden G1 und G2 verlaufen unter einem feststehenden Winkel β ungleich 0° zueinander. Der Winkel β beträgt in dieser Ausführungsform 160,5°. Die Mittelpunkte M1, M2 und M3 der Rollen R1, R2 und R3 liegen auf einem Kreisbogen K. Diese Lagebeziehung zwischen den Stützrollen R1 bis R3 ist unveränderlich und unabhängig davon, welche Stützrolle in die Arbeitsposition gestellt wird.

Diese besondere Lagebeziehung zwischen den Rollen R1 bis R3 führt dazu, dass durch Verschwenken des Haltearms 5 jede gewünschte Rolle in eine Arbeitsposition gebracht werden kann, in der ihre Stützkontur SK1 bis SK3 mit der Außenfläche der extrudierten Kunststoffrohre in Kontakt gerät und die Rohre so geeignet unterstützt. Die Stützkontor umfasst dabei jeweils einen Teil des Profilumfangs, wobei ein Flächenkontakt zwischen der Stützrolle und dem zu unterstützenden Profil bzw. Rohr entsteht.

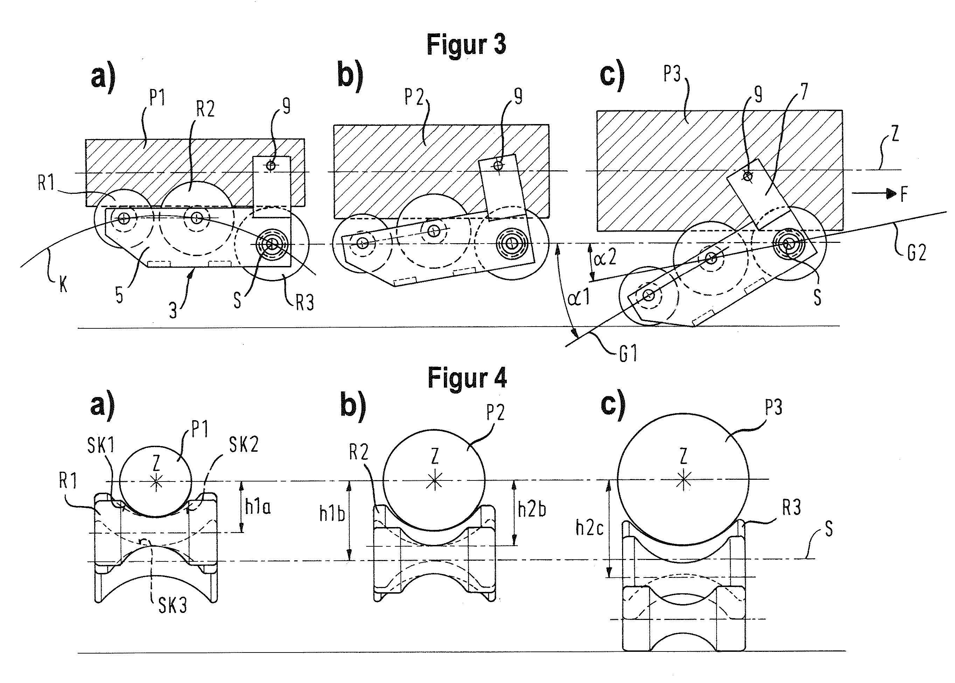

Die Figuren 3 und 4 zeigen die Rohrunterstützung aus Figur 2 in drei verschiedenen Stellungen, von denen jede der Arbeitsposition einer der drei Rollen R1 bis R3 entspricht. Figur 3 zeigt Seitenansichten und Figur 4 Frontansichten der Rohrunterstützung.

Die Figur 3 veranschaulicht auch die Lage der Schwenkachse S der Haltearme 5 senkrecht zur Förderrichtung F der extrudierten Rohre. Die extrudierten und zu unterstützenden Rohre sind ebenfalls dargestellt; sie haben unterschiedliche Außendurchmesser. Man beachte, dass die Mittelachse Z der Rohre jedoch unabhängig vom Außendurchmesser immer auf gleicher Höhe verläuft. Die Rohre werden also stets mittig geführt.

Durch Verschwenken des Rollenhalters 3 um die Schwenkachse S herum ändert sich der Abstand der Mittelachse zumindest einer der Rollen R1 und R2 von der Mittelachse Z der Rohre. Die Mittelachse der Rolle R3 fällt in dieser Ausführungsform dagegen mit der Schwenkachse S der Haltearme 5 zusammen, so dass die Stützrolle R3 ihre Lage relativ zur Mittelachse Z der Rohre nicht ändert.

In der Stellung a) gemäß den Figuren 3 a) und 4 a) ist die Rohrunterstützung zum Unterstützen von Rohren P1 mit einer ersten Geometrie, z.B. einem Außendurchmesser von 90 mm, eingestellt. Der Haltearm 5 ist waagerecht positioniert, die Gerade G1, die die Mittelpunkte der beiden ersten Rollen R1 und R2 verbindet, verläuft parallel zur Mittelachse Z der zu unterstützenden Rohre (α1a = 0°), während die Gerade G2 einen Winkel α2a bezüglich dieser Mittelachse Z bildet. Dadurch ist die erste Rolle R1 in ihrer Arbeitsstellung positioniert, in der ihre Stützkontur für den Kontakt mit dem Außenumfang der Rohre DN90 angeordnet ist. Die Stützkontur der zweiten Rolle R2 gerät in dieser Stellung ebenfalls in Kontakt mit dem Außenumfang der Rohre DN90 und unterstützt die Rohre so zusätzlich. Die Stützkontur der dritten Rolle gerät dagegen nicht in Kontakt mit dem Außenumfang dieser Rohre. Wie sich insbesondere auch aus der Frontansicht gemäß Figur 4 a) ergibt, steht das Rohr P1 (DN90) in Kontakt mit den Stützkonturen SK1 und SK2 der Rollen R1 und R2, wohingegen die Stützkontur SK3 der Rolle R3 deutlich vom Außenumfang des Rohres beabstandet ist.

In der Stellung b) gemäß den Figuren 3 b) und 4 b) ist die Rohrunterstützung zum Unterstützen von Rohren P2 mit einer zweiten, von der ersten verschiedenen Geometrie, z.B. einem Außendurchmesser von 110 mm, eingestellt. Die Haltearm 5 stehen nicht mehr waagerecht positioniert, sondern sind bezüglich der Stellung a) verschwenkt. Die Gerade G1, die die Mittelpunkte der beiden ersten Rollen R1 und R2 verbindet, bildet einen Winkel α1b bezüglich der Mittelachse Z der zu unterstützenden Rohre, während die Gerade G2 einen Winkel α2b bezüglich dieser Mittelachse Z bildet. Dadurch ist die zweite Rolle R2 in ihrer Arbeitsstellung positioniert, in der ihre Stützkontur für den Kontakt mit dem Außenumfang der Rohre DN110 angeordnet ist. Die Stützkonturen der ersten und der dritten Rolle R1 und R3 geraten dagegen nicht in Kontakt mit dem Außenumfang dieser Rohre. Wie sich insbesondere auch aus der Frontansicht gemäß Figur 4 b) ergibt, steht das Rohr P2 (DN110) in Kontakt mit der Stützkontur SK2 der Rolle R2, während die Stützkonturen SK1 und SK3 der Rollen R1 und R3 deutlich vom Außenumfang des Rohres beabstandet sind.

In der Stellung c) gemäß den Figuren 3 c) und 4 c) ist die Rohrunterstützung schließlich zum Unterstützen von Rohren P3 mit einer dritten, von der ersten und der zweiten verschiedenen Geometrie, z.B. einem Außendurchmesser von 140 mm, eingestellt. Die Haltearm 5 sind bezüglich der Stellung b) noch weiter verschwenkt worden. Die Gerade G1, die die Mittelpunkte der beiden ersten Rollen R1 und R2 verbindet, bildet einen Winkel α1c bezüglich der Mittelachse Z der zu unterstützenden Rohre, während die Gerade G2 einen Winkel α2c bezüglich dieser Mittelachse Z bildet. Dadurch ist die dritte Rolle R3 in ihrer Arbeitsstellung positioniert, in der ihre Stützkontur für den Kontakt mit dem Außenumfang der Rohre DN140 angeordnet ist. Die Stützkonturen der ersten und der zweiten Rolle R1 und 23 geraten dagegen nicht in Kontakt mit dem Außenumfang dieser Rohre. Wie sich insbesondere auch aus der Frontansicht gemäß Figur 4 c) ergibt, steht das Rohr P3 (DN140) in Kontakt mit der Stützkontur SK3 der Rolle R3, während die Stützkonturen SK1 und SK2 der Rollen R1 und R2 deutlich vom Außenumfang des Rohres beabstandet sind.

Auf diese Art und Weise kann schnell und problemlos die für den gerade extrudierten Rohrdurchmesser geeignete Rolle R1, R2 oder R3 in die jeweilige Arbeitsposition gestellt werden. Die Gestalt jeweilige Stützkontur SK1 bis SK3 ist jeweils für einen bestimmten Rohraußendurchmesser besonders geeignet, so dass die Rohre in einem Teilbereich ihres Außenumfangs lückenlos unterstützt werden und jegliche Verformungen der frisch extrudierten Rohre durch die Rohrunterstützung verhindert werden.

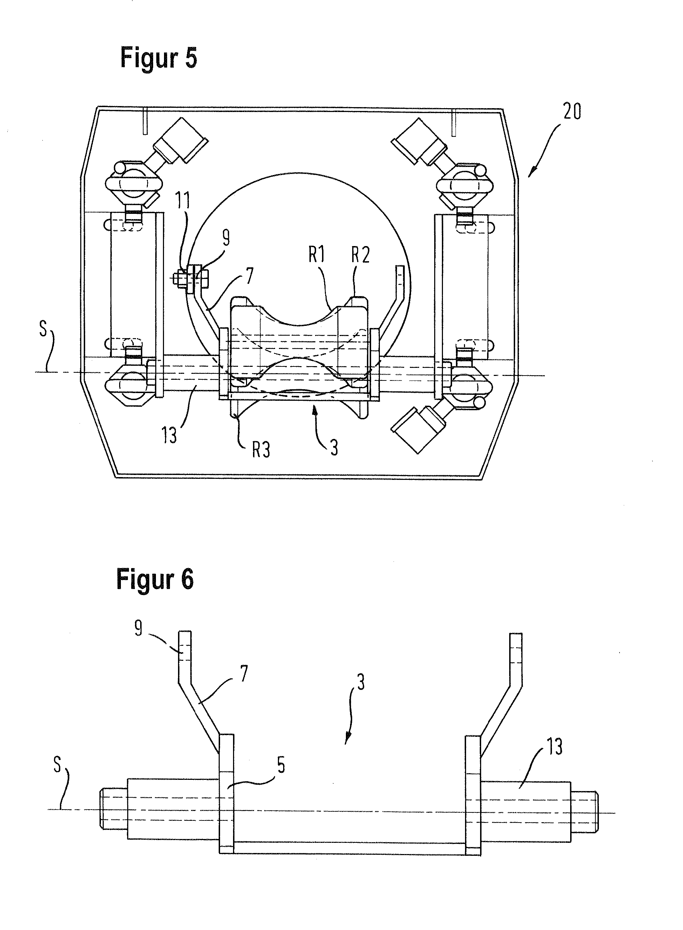

Die Figur 5 zeigt weitere Details der Anordnung der erfindungsgemäßen Rohrunterstützung in der Extrudereinheit. Die Figur zeigt schematisch die Frontansicht eines Vakuumtanks, den das extrudierte Rohr durchläuft. Die erfindungsgemäße, oben beschriebene Rohrunterstützung mit dem Rollenhalter 3 und den drei Stützrollen R1 bis R3 ist im Bereich dieses Vakuumtanks vorgesehen, um die extrudierten Rohre geeignet zu unterstützen. Die Figur zeigt auch ein Gestänge 11, das mit einem der Schwenkhebel 7 in einem Angriffspunkt 9 gekoppelt ist, so dass der Rollenhalter 3 mittels dieses Gestänges 11 verschwenkt werden kann. Der Rollenhalter 3 ist seinerseits über zwei Wellenenden 13 in der Extrusionsvorrichtung gelagert, so dass er insgesamt um die Schwenkachse S herum verschwenkt werden kann.

Figur 6 ist schließlich eine Detailansicht des Rollenhalters 3 mit seinen Haltearmen 5, Schwenkhebeln 7 und Wellenenden 13.

Die Erfindung ist mit Bezug auf eine bevorzugte Ausführungsform beschrieben worden. Die vorliegende Erfindung ist jedoch nicht auf diese bevorzugte Ausführungsform beschränkt.

Insbesondere kann das Prinzip der Erfindung, obwohl die bevorzugte Ausführungsform eine Rohrunterstützung zum Unterstützen von Kunststoffrohren ist, auch auf Vorrichtungen zum Extrudieren von andersartigen Kunststoffprofilen angewendet werden.

Darüber hinaus verwendet die vorliegende Ausführungsform drei Stützelemente in Form dreier Stützrollen in einer bestimmten Lagebeziehung zueinander. Die Erfindung deckt aber auch Ausführungsformen mit nur zwei Stützelementen ab. Beispielsweise könnte die bevorzugte Ausführungsform so modifiziert werden, dass nur die beiden Rollen R1 und R2 oder nur die beiden Rollen R2 und R3 verwendet werden. Auch in diesem Fall könnte durch geeignetes Verschwenken des Rollenhalters stets die gewünschte Rolle in die Arbeitsposition gestellt werden.

## Patentansprüche

1. Vorrichtung zur Unterstützung von Kunststoffprofilen in einer Extrusionslinie,
mit zumindest zwei Stützelementen (R1, R2, R3), die jeweils eine Stützkontur (SK1, SK2, SK3) aufweisen,
wobei die Stützkonturen der Stützelemente verschieden voneinander ausgestaltet sind, um eine Unterstützung von Kunststoffprofilen (P1, P2, P3) mit unterschiedlichen Dimensionen und / oder Geometrien zu gewährleisten,
**gekennzeichnet durch**
eine Stelleinrichtung, die dazu ausgestaltet ist, jeweils eines der Stützelemente in eine Arbeitsposition zu bringen, in der die Stützkontur dieses Stützelements für den Kontakt mit den zu unterstützenden Kunststoffprofilen angeordnet ist.

2. Vorrichtung zur Unterstützung von Kunststoffprofilen nach Patentanspruch 1, bei welcher die Stützelemente an einer gemeinsamen Haltevorrichtung (3) gelagert sind und die Stelleinrichtung auf die Haltevorrichtung einwirkt, um jeweils eines der Stützelemente in die Arbeitsposition zu bringen.

3. Vorrichtung zur Unterstützung von Kunststoffprofilen nach Patentanspruch 2, bei welcher die Haltevorrichtung zumindest einen um einen Schwenkpunkt (S) herum verschwenkbar gelagerten Haltearm (5) aufweist.

4. Vorrichtung zur Unterstützung von Kunststoffprofilen nach Patentanspruch 3, bei welcher eine Betätigungsvorrichtung wie beispielsweise ein Gestänge (11) zum Verschwenken des Haltearms (5) vorgesehen ist.

5. Vorrichtung zur Unterstützung von Kunststoffprofilen nach einem der vorangehenden Patentansprüche, bei welcher die Stelleinrichtung manuell und/oder automatisch betätigbar ist.

6. Vorrichtung zur Unterstützung von Kunststoffprofilen nach einem der vorangehenden Patentansprüche, bei welcher die Stützelemente in Form von Stützrollen vorgesehen sind, deren Drehachsen quer zur Beförderungsrichtung (F) der Kunststoffprofile in der Extrusionslinie verlaufen.

7. Vorrichtung zur Unterstützung von Kunststoffprofilen nach Patentanspruch 6, bei welcher die Stützrollen im wesentlichen zylindrisch ausgebildet sind und die Stützkontur in der Mantelfläche des Zylinders ausgebildet ist, insbesondere jeweils eine in der Mantelfläche des Zylinders ausgebildete konvexe Einwölbung aufweist.

8. Vorrichtung zur Unterstützung von Kunststoffprofilen nach Patentanspruch 7, bei welcher die Einwölbungen der einzelnen Stützrollen verschiedene Krümmungsradien (r1, r2, r3) haben.

9. Vorrichtung zur Unterstützung von Kunststoffprofilen nach einem der vorangehenden Patentansprüche, bei welcher die Stützelemente in einer unveränderlichen Lagebeziehung zueinander vorgesehen sind.

10. Vorrichtung zur Unterstützung von Kunststoffprofilen nach Patentanspruch 9, bei welcher mindestens drei Stützelemente vorhanden sind die Drehmittelpunkte (M1, M2, M3) aller Stützelemente auf einem gemeinsamen Kreisbogen (K) liegen.

11. Vorrichtung zur Unterstützung von Kunststoffprofilen nach Patentanspruch 9 oder 10, bei welcher mindestens drei Stützelemente vorhanden sind und Geraden (G1, G2), die die Drehmittelpunkte (M1, M2; M2, M3) jeweils zweier benachbarter Stützelemente miteinander verbinden, winklig zueinander verlaufen.

12. Extrusionslinie mit zumindest einer Vorrichtung zur Unterstützung von Kunststoffprofilen gemäß einem der Patentansprüche 1 bis 11, beispielsweise im Bereich eines Vakuumtanks und/oder im Bereich einer Kühlstrecke.

13. Verfahren zum Unterstützen von Kunststoffprofilen in einer Extrusionslinie,
wobei die extrudierten Kunststoffprofile (P1, P2, P3) abhängig von ihren Dimensionen und/oder ihrer Geometrie mittels eines von mehreren Stützelementen (R1, R2, R3) unterstützt werden, die jeweils eine Stützkontur (SK1, SK2, SK3) aufweisen, und
wobei die Stützkonturen der Stützelemente verschieden voneinander ausgestaltet sind, um eine Unterstützung von Kunststoffprofilen mit unterschiedlichen Dimensionen und / oder Geometrien zu gewährleisten,
**dadurch gekennzeichnet, dass**
abhängig von den Dimensionen und/oder der Geometrie der gerade zu unterstützenden Profile eines der mehreren Stützelemente in eine Arbeitsposition gestellt wird, in der die Stützkontur dieses Stützelements für den Kontakt mit den zu unterstützenden Kunststoffprofilen angeordnet ist.

14. Verfahren zur Unterstützung von Kunststoffprofilen nach Patentanspruch 13, bei welchem eine Lagebeziehung der Stützelemente relativ zueinander unverändert bleibt.
